# EUROPÄISCHE PATENTSCHRIFT

(11) **EP 0 647 498 B1**
(45) Veröffentlichungstag und Bekanntmachung des Hinweises auf die Patenterteilung: **11.06.1997**
(21) Anmeldenummer: 94115658.0
(22) Anmeldetag: 05.10.1994
(51) Int. Cl.: B23K 26/18

(54) **Verfahren zur Bearbeitung eines Werkstückes unter Einsatz von Laserstrahlung bei Erhöhung des Absorptionsgrades der Werkstückoberfläche**
Process for machining a workpiece, using laser beam with increase of the absorption grade of the workpiece surface
Procédé d'usinage d'une pièce, utilisant le rayonnement laser avec augmentation du degré d'absorption de la surface de la pièce

(30) Priorität: 08.10.1993 DE 4334407
(43) Veröffentlichungstag der Anmeldung: 12.04.1995
(73) Patentinhaber: Linde Aktiengesellschaft, 65189 Wiesbaden (DE); FRAUNHOFER-GESELLSCHAFT ZUR FÖRDERUNG DER ANGEWANDTEN FORSCHUNG E.V., 80636 München (DE)
(72) Erfinder: Niederberger, Karl, Dipl.-Ing., D-81549 München (DE); Schiffer, Barbara, Dipl.-Ing., D-80805 München (DE); Scholz, Jürgen, Dipl.-Ing., D-81379 München (DE); Küpper, Frank, Dipl.-Ing., D-52066 Aachen (DE); Gasser, Andreas, Dr., Dipl.-Ing., D-52066 Aachen (DE)
(74) Vertreter: Kasseckert, Rainer

(56) Entgegenhaltungen:
- EP-A- 0 458 182
- US-A- 3 663 793
- PROCEEDINGS OF THE THIRD EUROPEAN CONFERENCE ON LASER TREATMENT OF MATERIALS, Bd. 2, 17. - 19.September 1990, ERLANGEN (DE), Seiten 389-398, XP002010024 A. ZWICK ET AL.: "Surface remelting of cast iron camshafts by CO2 laser radiation"
- LINDE-BERICHTE AUS TECHNIK UND WISSENSCHAFT, Nr. 65, 1990, Seiten 25-34, XP002010025 WILFRIED LISSACK ET AL.: "Gaseanwendung in der Glasindustrie"

## Beschreibung

Die Erfindung betrifft ein Verfahren zur Bearbeitung eines Werkstückes unter Einsatz von Laserstrahlung, wobei auf die zu bearbeitende Werkstückoberfläche eine Beschichtung aufgetragen wird, die den Absorptionsgrad der Oberfläche für die Laserstrahlung erhöht.

Bei der Lasermaterialbearbeitung, insbesondere von metallischen Werkstücken, tritt häufig das Problem auf, daß der überwiegende Teil der auf die zu bearbeitende Werkstückoberfläche einfallenden Laserstrahlung von der Werkstückoberfläche reflektiert wird. Damit wird die durch die Laserstrahlung zur Werkstückoberfläche transportierte Energie nur in einem unbefriedigenden Maße an der Werkstückoberfläche in andere Energieformen, wie beispielsweise Wärme, umgewandelt. Aus der Bestrebung, die Energieaufnahme durch die Werkstückoberfläche aus der Laserstrahlung zu erhöhen, ergaben sich verschiedenartige Lösungen, die allesamt die Reflektion der Laserstrahlung von der Oberfläche verringern bzw. die Absorption der Werkstückoberfläche erhöhen.

Der Absorptionsgrad der Werkstückoberfläche kann ohne direkte Behandlung der Oberfläche durch Ausnützen der Absorptionserhöhung bei Schrägeinfall parallel polarisierten Lichts (Brewster-Effekt) vergrößert werden. Das Ausnützen dieses Effekts führt allerdings zu einem relativ flachem Einfall der Laserstrahlung auf die Werkstückoberfläche. Dieser wiederum bedingt eine Zunahme der von der Laserstrahlung bestrahlten Werkstückoberfläche, da eine exakte Fokusierung auf die Werkstückoberfläche nicht mehr möglich ist. Das bedeutet, daß die Energieaufnahme der bestrahlten Werkstückoberfläche pro Flächeneinheit bei diesem Verfahren nicht wesentlich erhöht werden kann.

Es wurde daher versucht, durch Behandlung der Werkstückoberfläche den Absorptionsgrad der Oberfläche zu steigern. Eine Bearbeitung der Werkstückoberfläche durch Schleifen oder Sandstrahlen führt zwar zu einer Verringerung der gerichteten Reflektion des Laserstrahls von der Oberfläche, doch tritt ein merklicher Anteil an diffuser Reflektion auf, so daß der Gesamtreflektionsgrad nicht befriedigend verringert werden kann. Das Sandstrahlen und Schleifen von Werkstücken ist sehr aufwendig bei komplexen räumlichen Geometrien des Werkstückes. Sandstrahlen oder Schleifen bedeuten eine mechanische Belastung für das Werkstück, weshalb sie für filigrane Werkstückteile nicht eingesetzt werden können.

Eine weitere Möglichkeit, den Absorptionsgrad der Oberfläche zu erhöhen, bietet das Beschichten der Werkstückoberfläche. Hierbei ist das Auftragen von Lacken, Phosphat- oder Oxidschichten und Graphitbeschichtungen bekannt.

Die Graphitbeschichtung wird zumeist manuell durch Graphitsprays oder durch das Aufbringen graphithaltiger Flüssigkeiten auf die Werkstückoberfläche aufgetragen. Die bekannten Beschichtungen weisen jedoch Nachteile auf. Bei aufgespritzten oder aufgestrichenen Graphitbeschichtungen sind nur mit sehr hohem Aufwand gleichbleibende Schichtdicken zu erzielen. Das Auftragen der Graphitbeschichtungen ist schwer automatisierbar. Darüber hinaus enthalten Spray und Flüssigkeit außer Graphit metallurgisch nicht erwünschte Begleitsubstanzen, die das Bearbeitungsergebnis nachteilig beeinflussen. Die in Spray und Flüssigkeit enthaltenen Lösungsmittel führen außerdem zu Umweltbelastungen.

Beim Phosphatieren wird in der Regel das ganze Werkstück phosphatiert. Ist dies nicht erwünscht, müssen die entsprechenden Segmente abgedeckt werden. Das Phosphatieren macht die Behandlung von Gefahrstoffen (Phosphorsäure bzw. Schwermetallphosphate) erforderlich. Da bei der Phosphatierung Wärme zugeführt werden muß, kann es zum Verzug der Werkstücke kommen.

Das Aufbringen von Oxidschichten ist nicht für alle Werkstoffe geeignet (im wesentlichen für Fe-Werkstoffe). Beim Auftragen von Oxidschichten wird in der Regel das ganze Teil oxidiert. Ist dies unerwünscht, müssen entsprechende Segmente abgedeckt werden. Das Auftragen von Oxidschichten kann den Umgang mit Gefahrstoffen (oxidierende Beizen) erforderlich machen. Auch beim Auftragen von Oxidschichten kann eine Wärmezufuhr zum Werkstück notwendig sein, was wiederrum zu Verzugsproblemen führen kann.

Das Auftragen von Farbschichten ist schwer automatisierbar. Eine gleichbleibende reproduzierbare Schichtdicke ist nur mit sehr hohem Aufwand erzielbar. Die Farbschichten enthalten teilweise metallurgisch unerwünschte Substanzen, die im Werkstück in Lösung gehen können. Bei der Laserbearbeitung können, durch die Farbschichten bedingt, stark umweltbelastende Stoffe entstehen; insbesondere werden Lösungsmittel der Farbe freigesetzt.

Für die genannten Beschichtungen, bedingt für die Graphit-Beschichtung, gilt, daß sich die Entfernung nicht-bestrahlter Beschichtungen sehr aufwendig gestaltet.

Die oben aufgezählten Verfahren sind beispielsweise bekannt aus
- Laser Material Processing, William M. Steen, Seite 176 bis 179, Springer-Verlag Berlin - Heidelberg - New York 1991,
- Surface remelting of cast iron camshafts by CO₂ laser radiation, A. Zwick, A. Gasser, E.W. Kreutz und K. Wissenbach, ECLAT-90, Volume 2, Proceedings of the Third European Conference on Laser Treatment of Materials, Sept. 17 - 19, 1990, Erlangen, und
- Strahlwerkzeug Laser, Helmut Hügel, Seite 306 bis 311 und 319 bis 321, B.G. Teubner Stuttgart 1992.

Der Erfindung liegt die Aufgabe zugrunde, ein Verfahren der eingangs beschriebenen Art aufzuzeigen, wobei die aufgetragene Beschichtung eine wirksame Erhöhung der Absorption der Laserstrahlung sicherstellt, gleichzeitig aber die beschriebenen Nachteile bekannter Beschichtungen vermieden werden. Insbesondere soll dabei die Beschichtung reproduzierbar erzeugt, eine gleichbleibende Schichtdicke über die gesamte beschichtete Werkstückoberfläche erzielt und unerwünschte Nebenreaktionen der Beschichtung mit der Werkstückoberfläche unterbunden werden.

Diese Aufgabe wird erfindungsgemäß dadurch gelöst, daß ein organisches, brennbares Gas oder Gasgemisch verbrannt wird und durch Anlagerung der bei der Verbrennung erzeugten Kohlenstoff-Partikel die absorptionserhöhende Beschichtung auf der Werkstückoberfläche gebildet wird.

Die Beschichtung von Werkstücken ist aus einem anderen technischen Gebiet bekannt, nämlich aus der Glasindustrie. So wird beispielsweise in "Gaseanwendung in der Glasindustrie", LINDE-Berichte aus Technik und Wissenschaft, Nr. 65, 1990, Seiten 25 bis 34, ein Verfahren zur Beschichtung von Formen für die Hohlglasherstellung beschrieben, um eine rückstandsfreie Trennung von Form und Glas zu erreichen. Das Aufbringen einer Kohlenstoffbeschichtung unter der Bezeichnung CARBOFLAM® basiert auf dem Verbrennen einer Flamme aus Acetylen/Luft oder Acetylen/Sauerstoff. Überraschenderweise hat sich nun gezeigt, daß derartige Kohlenstoffbeschichtungen aufgrund ihrer bisher ungenutzten absorptionserhöhenden Eigenschaften, die allerdings bislang nicht wahrgenommen und deren Bedeutung nicht erkannt worden war, Vorteile für die Materialbearbeitung von Werkstücken unter Einsatz von Laserstrahlung mit sich bringen.

Die Durchführung des erfindungsgemäßen Verfahrens führt zum Auftrag einer Kohlenstoffschicht mit gleichbleibender Schichtdicke über die zu beschichtende Werkstückoberfläche. Die Kohlenstoffschicht wird dabei reproduzierbar erzeugt. Zusätzliche Vorteile ergeben sich dadurch, daß sich die Kohlenstoffschicht nach der Laserbearbeitung der Oberfläche des Werkstückes, die nicht mit dem Laser bearbeitet wurden, leicht wieder entfernen läßt. Die erfindungsgemäß aufgetragene Kohlenstoffschicht weist im Vergleich mit herkömmlichen Verfahren der Erhöhung des Absorptionsgrades der Werkstückoberfläche sehr geringe Verunreinigungen auf, so daß keine ungewollten Werkstoffveränderungen am Werkstück durch die Laserbearbeitung nach der Beschichtung auftreten. Insbesondere kann beim erfindungsgemäßen Verfahren mit einer flammaufgetragenen Absorptionsschicht aus Kohlenstoff-Partikeln auf der Werkstückoberfläche auf den Einsatz von Lösungsmitteln verzichtet werden.

Mit Vorteil wird die Verbrennungsflamme des Brenngases oder Brenngasgemisches mittels eines Brenners auf die zu beschichtende Oberfläche gerichtet. Dadurch läßt sich eine konstante Schichtdicke der angelagerten Kohlenstoffschicht erzeugen, wobei die Beschichtung unabhängig von Lage und Geometrie des zu bearbeitenden Werkstückes erfolgt. Als Abstand zwischen Brenner und zu beschichtender Oberfläche des Werkstücks hat sich ein Wert zwischen 50 und 500 mm, vorzugsweise 100 bis 400 mm, bewährt.

Vorteilhafterweise wird als organisches, brennbares Gas (Brenngas) Acetylen eingesetzt, gegebenenfalls gemischt mit einem anderen organischen Brenngas. Die bei der Verbrennung des organischen Brenngases erzeugten Kohlenstoff-Partikel enthalten außer Kohlenstoff bis zu 1 bis 3 Gew.-% Wasserstoff. Aus der Verbrennung von Acetylen gewonnene Kohlenstoffschichten zeichnen sich durch eine sehr hohe Reinheit aus. Sie bestehen zu über 99 % aus reinem Kohlenstoff. Die durchschnittliche Teilchengröße liegt etwa bei 40 bis 50 nm, wobei die Partikelgröße in etwa von 5 bis 250 nm reicht. Die bei der Verbrennung des organischen Brenngases entstehenden Kohlenstoff-Partikel setzen sich aus einer großen Zahl kleiner Kristalle der Größe 2 bis 3 nm zusammen. Die Kristalle wiederum bestehen aus einer Reihe graphitischer Schichten, (in der Regel 3 bis 5 Schichten), die dann eine annähernde kugelige Form der Partikel bilden.

Die Kohlenstoffschicht wird durch die Flamme, in der sich die Kohlenstoff-Partikel bilden, direkt auf die zu beschichtende Oberfläche des Werkstückes aufgetragen. Die Flamme soll dabei straff, aber nicht turbulent brennen, da bei turbulenten Flammen Umgebungsluft eingewirbelt wird, was die Bildung der Kohlenstoff-Partikel negativ beeinflußt. Die Schichten selbst liegen parallel zueinander. Jede kann 30 Kohlenstoff-Sechserringe enthalten. Im Gegensatz zum Graphit sind die C-Sechserringe unregelmäßig gegeneinander verschoben. Auch die Gitterkonstanten der im erfindungsgemäßen Verfahren entstehenden Kohlenstoffkristalle unterscheiden sich wesentlich von denen für reines Graphit.

Die in einer reinen Acetylenflamme gebildeten Kohlenstoff-Partikel sind schwarz-braun. Durch Verwendung eines Brenngasgemisches an Stelle des reinen organischen Brenngases kann die Farbe und Haftfähigkeit der Kohlenstoff-Schicht beeinflußt werden. Mit Vorteil wird daher ein Brenngasgemisch verwendet, das neben dem organischen Brenngas ein Sauerstoff enthaltendes Gas wie Luft, mit Sauerstoff angereicherte Luft oder reinen Sauerstoff enthält. Ein Brenngasgemisch aus Acetylen und Sauerstoff bildet eine tiefschwarze und gut haftende Kohlenstoffschicht. Geeignet ist dabei ein Brenngasgemisch mit einem Sauerstoffanteil von 1 bis 5 Mol-%. Beim Einsatz eines Brenngasgemisches aus Acetylen und Luft entsteht eine dunkelgraue und gut haftende Kohlenstoffschicht. In Versuchen bewährt hat sich ein Brenngasgemisch, das zwischen 5 und 10 Vol.-% Luft enthält. Bevorzugt wird dabei ein Hüllstrombrenner eingesetzt, bei dem die Acetylenflamme von einem strömenden Luftmantel umhüllt und gestützt wird.

Das erfindungsgemäße Beschichten der zu bearbeitenden Werkstückoberfläche kann räumlich und zeitlich getrennt von der Laserbearbeitung in einem separaten Arbeitsschritt oder aber unmittelbar vor der Laserbearbeitung in einem integrierten Arbeitsschritt erfolgen. Im letzteren Fall kann ausgenützt werden, daß die Laserstrahlanlage zur Laserbearbeitung üblicherweise CNC-gesteuert (Computerized Numerical Control) ist. Mit Vorteil kann daher die Steuerung des Brenners mit der Steuerung der Laserbearbeitungsanlage gekoppelt werden, wobei die CNC auch die Steuerung des Brenners zur Kohlenstoff-Beschichtung übernimmt.

In Ausgestaltung der Erfindung wird ein an die Kontur des Werkstückes angepaßter Brenner verwendet. Dabei wird insbesondere die Form der Brenneröffnung variiert, beispielsweise durch runde, elliptische oder schlitzförmige Brenneröffnungen. Dadurch wird eine gleichmäßige und vollständige Beschichtung der mit dem Laser zu bearbeiteten Werkstückoberflächen sichergestellt.

Mittels Abdeckungen und Masken kann eine Beschichtung mit einer beliebigen geometrischen Form auf der Werkstückoberfläche erzielt werden. Damit läßt sich erreichen, daß nur die Flächen mit Kohlenstoff beschichtet werden, welche auch anschließend mit dem Laser bearbeitet werden. Da hierbei kein Kohlenstoff auf Werkstückoberflächen angelagert wird, die anschließend nicht mit dem Laser bearbeitet werden, kann eine Nacharbeitung des Werkstückes entfallen, in der die Werkstückoberfläche nach der Laserbearbeitung von der Kohlenstoffbeschichtung gereinigt wird.

Das erfindungsgemäße Verfahren bietet insbesondere Vorteile bei der Bearbeitung mit einem Laserstrahl zum Laserstrahlhärten, zum Laserstrahlumschmelzen, zum Laserstrahlschneiden, zum Gravieren und zum Beschriften von Werkstücken.

Die Erfindung wird im folgenden anhand zweier Figuren näher erläutert.

Hierbei zeigen:
- Fig. 1:: ein vereinfachtes Schema eines Ausführungsbeispiels mit einer erfindungsgemäßen Beschichtung der Werkstückoberfläche und direkt anschließender Laserbearbeitung und
- Fig. 2:: ein vereinfachtes Schema zur Integration des Ausführungsbeispiels aus Fig. 1 in eine Anlage zur Laserbearbeitung.

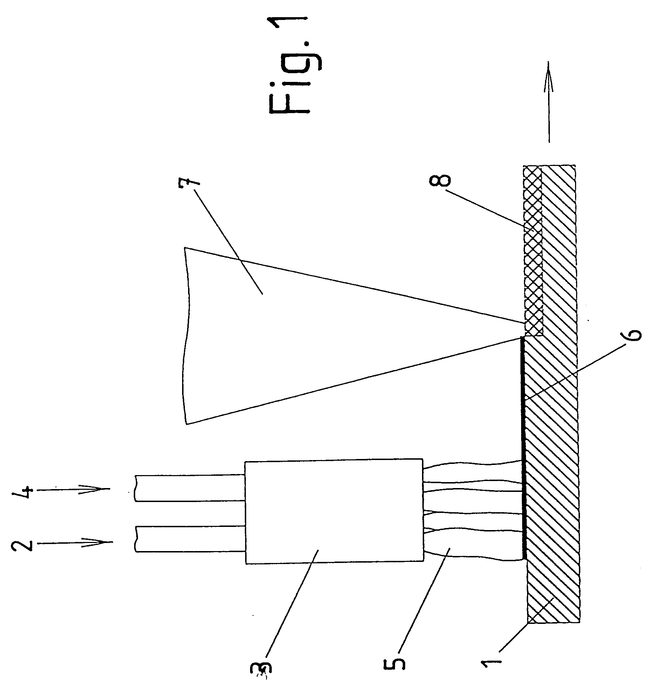

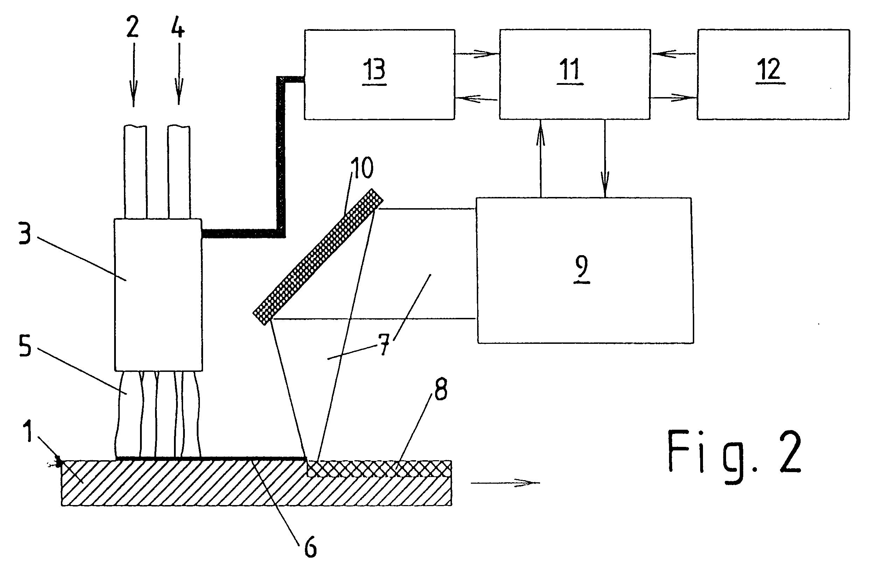

Äquivalente sind in Fig. 1 und Fig. 2 mit gleichen Bezugszeichen versehen.

In Fig. 1 ist ein Werkstück 1 abgebildet, dessen Werkstückoberfläche durch Laserstrahlung bearbeitet werden soll. Acetylen 2 wird als Brenngas einem Brenner 3 zugeführt. Gleichzeitig wird als Sauerstoff enthaltendes Gas 4 Sauerstoff oder Luft in den Brenner 3 geleitet. Das so gebildete Brenngasgemisch verbrennt in den Flammen 5, wobei sich Kohlenstoff-Partikel bilden. Diese Kohlenstoff-Partikel werden über die Brennerflammen 5 auf die Werkstückoberfläche getragen und bilden eine absorptionserhöhende Beschichtung 6 auf der Werkstückoberfläche. Der fokussierte oder defokussierte Laserstrahl 7 trifft auf die beschichtete Werkstückoberfläche 6, wo ein Großteil seiner Energie aufgrund der Beschichtung 6 absorbiert wird. Da das Werkstück durch den eingestellten Vorschub entsprechend der gezeigten Pfeilrichtung bewegt wird, resultiert aus der Beschichtung und Laserbestrahlung die bearbeitete Fläche 8.

Fig. 2 verdeutlicht die Integration der erfindungsgemäßen Beschichtung mit direkt anschließender Bearbeitung durch den Laserstrahl aus Fig. 1 in die Steuerung der Gesamtanlage. Vom Laser 9 wird die Laserstrahlung 7 über eine vereinfacht dargestellte Strahlführung 10 auf die beschichtete Werkstückoberfläche 6 geworfen. Der Laser 9 steht dabei in Wechselwirkung mit der Maschinensteuerung 11, welche wiederum, durch wechselseitige Pfeile symbolisiert, sowohl mit der Bearbeitungsanlage 12, als auch mit der Brennersteuerung 13 zusammenwirkt. Die Brennersteuerung 13 ist direkt mit dem Brenner 3 verbunden.

Sollte es bei der beispielhaft in Fig. 2 dargestellten Integration von Brenner in die Bearbeitungsanlage gewünscht oder erforderlich sein, daß die Kohlenstoff-Partikel bildende Flamme 5 nicht kontinuierlich Kohlenstoff-Partikel erzeugt und auf der Werkstückoberfläche anlagert, kann der Brenner 3 getaktet eingesetzt werden. In den Taktpausen, d.h. wenn die Kohlenstoff-Partikelbildung reduziert werden soll, kann im Brenngasgemisch der Anteil des Brenngases 2 verkleinert oder die Menge des zugegebenen sauerstoffhaltigen Gases 4 vergrößert werden.

## Patentansprüche

1. Verfahren zur Bearbeitung eines Werkstückes unter Einsatz von Laserstrahlung, wobei auf die zu bearbeitende Werkstückoberfläche eine Beschichtung aufgetragen wird, die den Absorptionsgrad der Oberfläche für die Laserstrahlung erhöht, **dadurch gekennzeichnet**, daß ein organisches, brennbares Gas oder Gasgemisch verbrannt wird und durch Anlagerung der bei der Verbrennung erzeugten Kohlenstoff-Partikel die absorptionserhöhende Beschichtung auf der Werkstückoberfläche gebildet wird.

2. Verfahren nach Anspruch 1, dadurch gekennzeichnet, daß die Verbrennungsflamme des Brenngases oder Brenngasgemisches mittels eines Brenners auf die zu beschichtende Oberfläche gerichtet wird.

3. Verfahren nach Anspruch 2, dadurch gekennzeichnet, daß ein Abstand zwischen Brenner und zu beschichtender Werkstückoberfläche zwischen 50 und 500 mm, vorzugsweise zwischen 100 und 400 mm, eingestellt wird.

4. Verfahren nach einem der Ansprüche 1 bis 3, dadurch gekennzeichnet, daß als organisches, brennbares Gas Acetylen und/oder ein anderes organisches Brenngas eingesetzt wird.

5. Verfahren nach einem der Ansprüche 1 bis 4, dadurch gekennzeichnet, daß das Brenngasgemisch neben dem organischen Brenngas ein Sauerstoff enthaltendes Gas wie Luft, mit Sauerstoff angereicherte Luft oder reinen Sauerstoff enthält.

6. Verfahren nach Anspruch 5, dadurch gekennzeichnet, daß das Brenngasgemisch einen Sauerstoffanteil von 1 bis 5 Mol-% enthält.

7. Verfahren nach Anspruch 5, dadurch gekennzeichnet, daß das Brenngasgemisch zwischen 5 und 10 Vol.-% Luft enhält.

8. Verfahren nach einem der Ansprüche 2 bis 7, dadurch gekennzeichnet, daß die Steuerung des Brenners mit der Steuerung der Laserbearbeitungsanlage gekoppelt ist.

9. Verfahren nach einem der Ansprüche 2 bis 8, dadurch gekennzeichnet, daß ein an die Kontur des Werkstückes angepaßter Brenner verwendet wird.

10. Verfahren nach einem der Ansprüche 2 bis 9, dadurch gekennzeichnet, daß mittels Abdeckungen und Masken eine Beschichtung mit einer bestimmten geometrischen Form auf der Werkstückoberfläche erzielt wird.

11. Anwendung der Verfahren nach einem der Ansprüche 1 bis 10 auf das Laserstrahlhärten, Laserstrahlumschmelzen, Laserstrahlschneiden, Gravieren und Beschriften von Werkstücken.

## Claims

1. Method for processing a workpiece using laser radiation, in which the surface of the workpiece to be processed is given a coating which increases the level of absorption of the surface for the laser radiation, characterised in that an organic combustible gas or gas mixture is burnt and the absorption-increasing coating is formed on the surface of the workpiece by accumulation of the carbon particles produced during combustion.

2. Method according to claim 1, characterised in that the combustion flame of the combustible gas or combustible gas mixture is directed at the surface to be coated by means of a burner.

3. Method according to claim 2, characterised in that a distance of between 50 and 500 mm, preferably between 100 and 400 mm, is set between the burner and the surface of the workpiece to be coated.

4. Method according to one of claims 1 to 3, characterised in that acetylene and/or another organic combustible gas is used as the organic combustible gas.

5. Method according to one of claims 1 to 4, characterised in that in addition to the organic combustible gas, the combustible gas mixture contains a gas containing oxygen such as air, air enriched with oxygen or pure oxygen.

6. Method according to claim 5, characterised in that the combustible gas mixture has an oxygen content of 1 to 5 mol%.

7. Method according to claim 5, characterised in that the combustible gas mixture contains between 5 and 10% by volume of air.

8. Method according to one of claims 2 to 7, characterised in that the control of the burner is coupled to the control of the laser processing installation.

9. Method according to one of claims 2 to 8, characterised in that a burner matching the contour of the workpiece is used.

10. Method according to one of claims 2 to 9, characterised in that a coating with a specific geometric shape is produced on the surface of the workpiece by means of covers and masks.

11. Use of the method according to one of claims 1 to 10 for laser beam hardening, laser beam remelting, laser beam cutting, engraving and inscription of workpieces.

## Revendications

1. Procédé d'usinage d'une pièce, utilisant le rayonnement laser, dans lequel un revêtement est déposé sur la surface de la pièce à usiner, lequel revêtement augmentent le coefficient d'absorption de la surface de la pièce face au rayonnement laser, caractérisé en ce qu'un gaz ou un mélange de gaz organique combustible est amené à combustion et que le dépôt des particules de carbone produites au cours de la combustion forme un revêtement augmentant le pouvoir d'absorption de la surface de la pièce.

2. Procédé selon la revendication 1, caractérisé en ce que la flamme de combustion du gaz combustible ou du mélange de gaz combustible est dirigée sur la surface à revêtir à l'aide d'un brûleur.

3. Procédé selon la revendication 2, caractérisé en ce que la distance entre le brûleur et la surface à revêtir de la pièce est comprise entre 50 et 500 mm, de préférence entre 100 et 400 mm.

4. Procédé selon l'une quelconque des revendications 1 à 3, caractérisé en ce que le gaz organique combustible utilisé est l'acétylène et/ou un autre gaz organique combustible.

5. Procédé selon l'une quelconque des revendications 1 à 4, caractérisé en ce que le mélange de gaz combustible contient, à part le gaz organique combustible, également un gaz qui contient de l'oxygène, tel que l'air, l'air enrichi d'oxygène ou l'oxygène pur.

6. Procédé selon la revendication 5, caractérisé en ce que le mélange de gaz combustible contient une proportion d'oxygène qui varie de 1 à 5 % en moles.

7. Procédé selon la revendication 5, caractérisé en ce que le mélange de gaz combustible contient de l'air dans une proportion comprise entre 5 et 10 % en volume.

8. Procédé selon l'une quelconque des revendications 2 à 7, caractérisé en ce que la commande du brûleur est couplée à la commande de l'installation d'usinage par laser.

9. Procédé selon l'une quelconque des revendications 2 à 8, caractérisé en ce que l'on utilise un brûleur adapté aux contours de la pièce.

10. Procédé selon l'une quelconque des revendications 2 à 9, caractérisé en ce que l'utilisation de caches ou de masques permet de déposer sur la surface de la pièce un revêtement avec une forme géométrique déterminée.

11. Utilisation du procédé selon l'une quelconque des revendications 1 à 10, pour des opérations de trempe au rayon laser, de refusion au rayon laser, de découpage au rayon laser, de gravage et de marquage des pièces.
